# EUROPEAN PATENT APPLICATION

(11) **EP 4 797 672 A1**
(43) Date of publication of application: **26.08.2026**
(21) Application number: 26158760.4
(22) Date of filing: 16.02.2026
(51) Int. Cl.: H04N 1/00

(54) **IMAGE READING APPARATUS AND IMAGE FORMING APPARATUS**

(30) Priority: 19.02.2025 JP 2025025090
(71) Applicant: Canon Kabushiki Kaisha, Tokyo 146-8501 (JP)
(72) Inventor: ITO, Naruhiko, Ohta-ku, Tokyo, 146-8501 (JP); NAGANO, Koji, Ohta-ku, Tokyo, 146-8501 (JP)
(74) Representative: TBK

(57) **Abstract**

Disclosed is an image reading apparatus (IR) with a reading unit (6) including a transparent member (6b) and a reader (6i), and a conveyance unit (7) including a housing (70) provided with an attaching portion (109A), a first cover (106) attached to a lower portion of the housing (70), a second cover (107) including a holding portion (116) and attached to the lower portion of the housing (70), and a pressing member (104) configured to press a sheet against the transparent member (6b), the pressing member (104) being detachably held by the holding portion (116). The first cover (106) is attachable to/ detachable from the housing (70) in a state in which the second cover (107) remains attached to the housing (70).

## Description

### TECHNICAL FIELD

The present disclosure relates to an image reading apparatus that reads an image on a sheet, and an image forming apparatus that forms an image on a recording material.

### BACKGROUND

Hitherto, as an image forming apparatus that forms an image on a sheet, there has been known an image forming apparatus including a communication unit for communicating with an integrated circuit (IC) card for performing personal authentication and a communication target such as a mobile phone (smartphone). Japanese Patent Application Laid-open No. 2018-064140 discusses an image reading apparatus including a document conveyance apparatus to and from which a card reader that communicates with an IC card is attachable and detachable.

### SUMMARY

Hitherto, in attaching and detaching the communication unit to and from the apparatus, work of attaching and detaching the cover member covering the communication unit to and from the apparatus after attaching the communication unit tended to be cumbersome.

The present disclosure in its first aspect provides an image reading apparatus as specified in claim 1. Optional features are specified in claim 2 to 14.

The present disclosure in its second aspect provides an image forming apparatus as specified in claim 15.

Features of the present disclosure will become apparent from the following description of embodiments with reference to the attached drawings. The following description of embodiments is described by way of example.

The present disclosure provides an image reading apparatus and an image forming apparatus which can simplify attaching/detaching a communication unit thereto.

### BRIEF DESCRIPTION OF THE DRAWINGS

FIG. 1 is a schematic view of an image forming apparatus according to an embodiment.
FIG. 2 is a perspective view of the image forming apparatus according to the embodiment.
FIG. 3 is another perspective view of an image reading apparatus according to the embodiment.
FIG. 4 is a view of an automatic document feeder (ADF) according to the embodiment when viewed from a pressing plate side.
FIG. 5 is a view illustrating a state in which a pressing plate of the ADF according to the embodiment is removed.
FIG. 6 is an enlarged view illustrating a part of the ADF according to the embodiment.
FIG. 7A is an enlarged view illustrating a part of the ADF according to the embodiment.
FIG. 7B is an enlarged view illustrating a part of the ADF according to the embodiment.
FIG. 7C is an enlarged view illustrating a part of the ADF according to the embodiment.
FIG. 7D is an enlarged view illustrating a part of the ADF according to the embodiment.
FIG. 8A is an enlarged view illustrating a part of the ADF according to the embodiment.
FIG. 8B is a perspective view illustrating a part of the ADF according to the embodiment.
FIG. 9 is a view illustrating a state in which the pressing plate of the ADF and each lower cover according to the embodiment are removed.
FIG. 10A is an explanatory view of a housing member of the ADF according to the embodiment.
FIG. 10B is an explanatory view of the housing member of the ADF according to the embodiment.
FIG. 11A is an explanatory view of the housing member of the ADF according to the embodiment.
FIG. 11B is an explanatory view of the housing member of the ADF according to the embodiment.
FIG. 12 is a view illustrating a state in which a central cover of the ADF according to the embodiment is removed.
FIG. 13A is a view illustrating a method of attaching a card reader to the ADF according to the embodiment.
FIG. 13B is a view illustrating the method of attaching the card reader to the ADF according to the embodiment.
FIG. 13C is a view illustrating the method of attaching the card reader to the ADF according to the embodiment.
FIG. 14A is a view illustrating the method of attaching the card reader to the ADF according to the embodiment.
FIG. 14B is a view illustrating the method of attaching the card reader to the ADF according to the embodiment.
FIG. 14C is a view illustrating the method of attaching the card reader to the ADF according to the embodiment.
FIG. 15A is a perspective view illustrating a part of the ADF according to the embodiment.
FIG. 15B is a perspective view illustrating a part of the ADF according to the embodiment.
FIG. 15C is a perspective view illustrating a part of the ADF according to the embodiment.
FIG. 16 is a view illustrating a shape of a central cover according to a modified example.
FIG. 17 is a view of an ADF according to a comparative example when viewed from a pressing plate side.
FIG. 18 is a view illustrating a state in which a pressing plate of the ADF according to the comparative example is removed.

### DESCRIPTION OF THE EMBODIMENTS

Hereinafter, embodiments according to the present disclosure will be described with reference to the drawings.

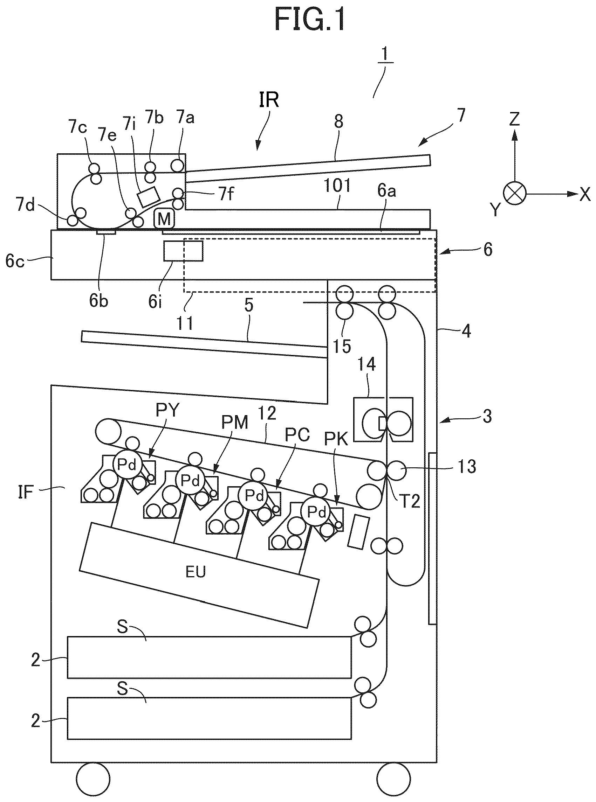

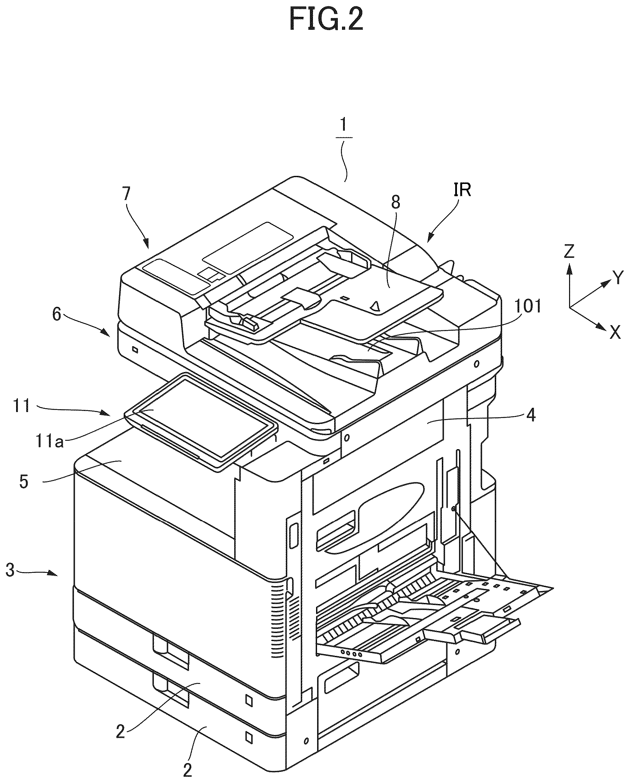

FIG. 1 is a schematic view illustrating a cross-sectional configuration of an image forming apparatus 1 according to an embodiment. FIG. 2 is an overall perspective view of the image forming apparatus 1.

In the following description, as indicated in FIGS. 1-6, 9 and 12, a vertical direction (direction of gravity) when the image forming apparatus 1 is installed on a horizontal plane is a Z-axis direction. A direction of a rotation axis of an image bearing member (photosensitive drum) included in the image forming apparatus 1 is a Y-axis direction. A direction intersecting both the Z-axis direction and the X-axis direction is an X-axis direction. The X-axis direction, the Y-axis direction, and the Z-axis direction may be orthogonal to each other.

The X-axis direction may be referred to as a width direction or a left-right direction of the image forming apparatus 1 according to the present embodiment, and the Y-axis direction may be referred to as a depth direction or a front-rear direction of the image forming apparatus 1 according to the present embodiment. In the direction along each coordinate axis, a positive direction and a negative direction are respectively indicated using a sign of + (plus) and - (minus) as necessary. In the illustrated coordinate axes, a +X side corresponds to a right side of the image forming apparatus 1, a -X side corresponds to a left side of the image forming apparatus 1, a +Y side corresponds to a back surface side of the image forming apparatus 1, and a -Y side corresponds to a front side (front surface side) of the image forming apparatus 1.

A configuration of the image forming apparatus 1 is described with reference to FIGS. 1 and 2, which illustrate the image forming apparatus 1, which includes an apparatus body 3 and an image reading apparatus IR disposed on an upper side of the apparatus body 3. The image forming apparatus 1 can form an image on a recording material S based on image information read from a document by the image reading apparatus IR, for example. As the recording material S and the document, various sheet materials having different sizes and materials, such as paper such as plain paper or thick paper, a sheet material subjected to surface treatment such as coated paper, a sheet material having a special shape such as an envelope or index paper, a plastic film, and cloth, can be used.

### Apparatus Body

The apparatus body 3 (image forming apparatus body) of the image forming apparatus 1 will be described. The apparatus body 3 includes an electrophotographic image formation unit IF serving as an image forming unit, and a conveyance mechanism that conveys the recording material S. The image formation unit IF of the present embodiment is a tandem type/intermediate transfer type electrophotographic unit in which four process units PY, PM, PC, and PK are arranged along an intermediate transfer belt 12.

As the image forming unit, a direct transfer type electrophotographic unit may also be used. Further, the image forming unit is not limited to an electrophotographic system, and an inkjet printing mechanism may be used as the image forming unit, for example.

The image formation unit IF of the present embodiment includes the process units PY, PM, PC, and PK, an exposure unit EU, the intermediate transfer belt 12, a secondary transfer roller 13, and a fixing unit 14.

Each of the process units PY to PK includes a photosensitive drum Pd serving as the image bearing member and process members (a charging member, a developing member, and a cleaning member) acting on the photosensitive drum Pd. The process units PY to PK accommodate yellow, magenta, cyan, and black toners as developers, respectively. The exposure unit EU includes a laser light source and an exposure optical system for guiding light emitted from the laser light source to the photosensitive drum Pd of each of the process units PY to PK to scan a surface of the photosensitive drum Pd.

The intermediate transfer belt 12 is stretched around a plurality of rollers and is in contact with each photosensitive drum Pd and the secondary transfer roller 13. A primary transfer portion is formed between the photosensitive drum Pd of each of the process units PY to PK and the intermediate transfer belt 12. A secondary transfer portion T2 is formed between the intermediate transfer belt 12 and the secondary transfer roller 13. The fixing unit 14 includes, for example, a fixing roller serving as a heating member, a heat source such as a halogen lamp that heats the fixing roller, and a pressure roller that is in pressure contact with the fixing roller.

An operation unit 11 is provided on the front surface side of the image forming apparatus 1. A user can input setting information, an instruction to perform image formation, an instruction to perform image reading by the image reading apparatus IR, and the like to the image forming apparatus 1 by operating the operation unit 11.

The operation unit 11 includes a liquid crystal panel 11a serving as a display unit that displays information, and is disposed such that the liquid crystal panel 11a faces upward. The operation unit 11 is disposed, for example, at a position lower than an upper surface (document placement surface) of a reader unit 6 of the image reading apparatus IR, as described below.

An image forming operation, which is a series of operations in which the image forming apparatus 1 forms an image on the recording material S while conveying the recording material S, will be described. In the image forming operation, each photosensitive drum Pd and the intermediate transfer belt 12 are rotationally driven in a predetermined direction. The surface of each photosensitive drum Pd is uniformly charged by the charging member. The exposure unit EU is driven by, for example, an image signal (video signal) generated from the image information read from the document by the image reading apparatus IR, and executes exposure processing by irradiating the charged surface of each photosensitive drum Pd with light. As a result, an electrostatic latent image is formed on the surface of each photosensitive drum Pd. The developing member corresponding to each photosensitive drum Pd bears any one of the yellow, magenta, cyan, and black toners and supplies the toner to the photosensitive drum Pd to develop the electrostatic latent image into a toner image.

The toner image formed on each photosensitive drum Pd is primarily transferred to the intermediate transfer belt 12 at the primary transfer portion. At this time, first, a yellow toner image is transferred, and then magenta, cyan, and black toner images are transferred so as to overlap the yellow toner image, whereby a full-color toner image is formed on the intermediate transfer belt 12. The full-color toner image is conveyed to the secondary transfer portion T2 by rotation of the intermediate transfer belt 12.

On the other hand, the recording materials S accommodated in a cassette 2 (sheet accommodation portion) disposed at a lower portion of the apparatus body 3 are fed one by one toward the secondary transfer portion T2 by a feed roller or the like. After skew feeding correction is performed on the fed recording material S, the recording material S is conveyed to the secondary transfer portion T2 at a timing when the toner image reaches the secondary transfer portion T2. Then, while the recording material S passes through the secondary transfer portion T2, the toner image is (secondarily) transferred from the intermediate transfer belt 12 to the recording material S.

The recording material S having passed through the secondary transfer portion T2 is subjected to image fixing processing by the fixing unit 14. The fixing unit 14 heats and pressurizes the toner image on the recording material S while nipping and conveying the recording material S at a nip portion between the fixing roller and the pressure roller. The recording material S having passed through the fixing unit 14 is discharged from the apparatus body 3 to a discharge tray 5 serving as a stacking unit by a discharge roller pair 15 serving as a discharge unit. The discharge tray 5 forms a discharge space at an upper portion of the apparatus body 3 and under the image reading apparatus IR, in which the recording material S (product) on which the image is formed is discharged. The user can access the discharge tray 5 from the front surface side (-Y side) of the apparatus to take out the recording material S.

### Image Reading Apparatus

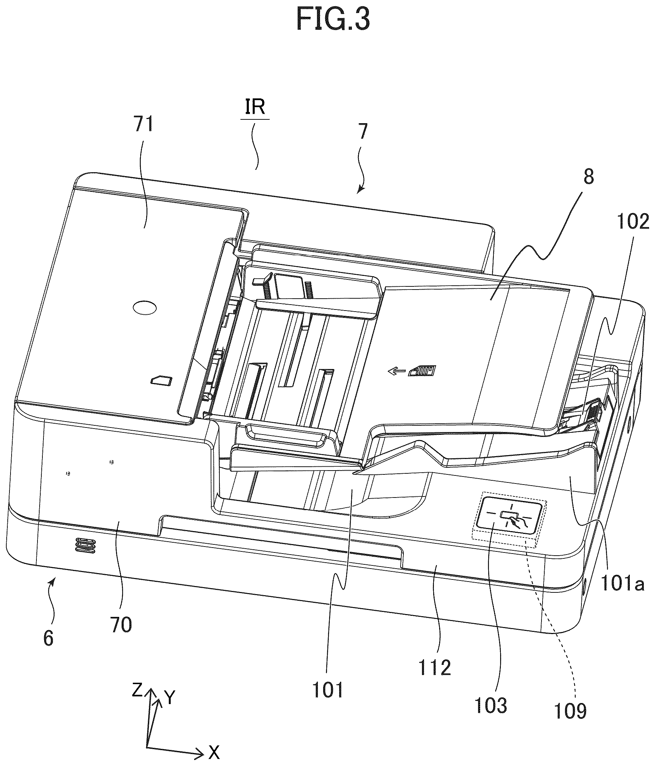

The image reading apparatus IR will be described with reference to FIGS. 1 to 3. FIG. 3 is a perspective view of the image reading apparatus IR according to the present embodiment.

The image reading apparatus IR of the present embodiment is attached to the upper portion of the apparatus body 3. More specifically, the apparatus body 3 includes a vertical path portion 4 extending vertically on the +X side with respect to the discharge space, and the image reading apparatus IR is attached to an upper surface portion of the vertical path portion 4. A conveyance mechanism for the recording material S, various sensors, a blower fan, and the like are housed in the vertical path portion 4, the conveyance mechanism including the discharge roller pair 15.

As illustrated in FIGS. 1 to 3, the image reading apparatus IR includes the reader unit 6 and an auto document feeder (ADF) 7 supported by the reader unit 6. The ADF 7 functions as a conveyance unit that conveys a sheet, which is the document, to the reader unit 6 (reading unit) having an image reading function. In a case where the reader unit 6 is a lower unit, the ADF 7 may be referred to as an upper unit supported by the lower unit so as to be openable and closable.

The ADF 7 is supported by the reader unit 6 via a hinge portion provided on the back surface side (+Y side) of the image reading apparatus IR, and pivots about a pivot axis extending in the X-axis direction. The ADF 7 is movable between a closed position where the ADF 7 covers a reading glass 6a of the reader unit 6 from above and an open position where the ADF 7 opens the reading glass 6a. The ADF 7 is an example of an opening/closing unit that can be opened and closed with respect to the reader unit 6 (reading unit).

The reader unit 6 includes a housing 6c fixed to the apparatus body 3, the reading glass 6a and a feeding-reading glass 6b, which are attached to an upper surface of the housing 6c, and a reading sensor 6i serving as a reader.

The reading glass 6a and the feeding-reading glass 6b are examples of transparent members that transmit light. As the reading sensor 6i, a contact image sensor (CIS) or a charge coupled device (CCD) image sensor may be used. The reading sensor 6i is a line sensor whose main scanning direction is the X-axis direction, and is movable in the Y-axis direction that is a sub-scanning direction below the reading glass 6a and the feeding-reading glass 6b. The reading sensor 6i can optically scan the document through the reading glass 6a or the feeding-reading glass 6b, which is the transparent member, and convert an image of the document into the image information serving as electronic data.

The ADF 7 includes a document tray 8, a discharge tray 101, a pressing plate 104 (a document pressing plate, also referred to as a pressing member), and a reading sensor 7i (FIG. 1). In addition, the ADF 7 includes one or more conveyance members (7a, 7b, 7c, 7d, 7e, and 7f) that convey the document (sheet) and a motor M (FIG. 1) serving as a drive source that drives the conveyance members. The motor M is disposed on a back surface side of the ADF 7.

The document tray 8 is a supporting unit (document support unit) on which the document is supported. The discharge tray 101 is positioned below the document tray 8. The pressing plate 104 is detachably attached at a lower portion (e.g., a lower portion of a housing lower cover portion, described below) of the ADF 7. The pressing plate 104 is disposed so as to come into contact with the reading glass 6a of the reader unit 6 when the ADF 7 is at the closed position, and is configured to press the document placed on the reading glass 6a against the reading glass 6a. The pressing plate 104 has a pressing surface 104a that presses the document on the reading glass 6a. The pressing surface 104a is a surface that expands in the X-axis direction and the Y-axis direction in a state in which the ADF 7 is closed.

As the reading sensor 7i of the ADF 7, a CIS or a CCD image sensor may be used. When the reading sensor 6i of the reader unit 6 is referred to as a first reading sensor, the reading sensor 7i of the ADF 7 may be referred to as a second reading sensor.

One or more conveyance members are disposed along a conveyance path curved in a U shape from the document tray 8 toward the discharge tray 101. The ADF 7 of the present embodiment includes a feed roller 7a, a separation roller pair 7b, a registration roller pair 7c, a first lead roller pair 7d, a second lead roller pair 7e, and a discharge roller pair 7f each functioning as the conveyance member.

The image reading apparatus IR can perform a reading operation (an automatic reading mode and a feeding-reading mode) of reading the image while conveying the documents one by one by the ADF 7. In addition, the image reading apparatus IR can perform the reading operation (a manual reading mode and a fixed-reading mode) of reading the image of the stationary document placed on the reading glass 6a.

In the case of the automatic reading mode, the user sets a document bundle on the document tray 8 and instructs execution of the reading operation via the operation unit 11. At this time, the user can set a monochrome or color reading mode, a size and a type of a sheet onto which a copy image of the document is to be output, the number of copies, and the like by operating the operation unit 11. The feed roller 7a comes into contact with the uppermost document (uppermost sheet) of the document bundle supported on the document tray 8 and feeds the document toward the left in FIG. 1. In a case where a plurality of documents are fed by the feed roller 7a, the separation roller pair 7b separates and conveys the documents one by one by a frictional force. The registration roller pair 7c corrects skew feeding of the document and adjusts a conveyance timing of the document. The first lead roller pair 7d and the second lead roller pair 7e convey the document while making the document pass through reading positions of the reading sensors 6i and 7i.

When the document passes through the reading positions, the document is optically scanned by the reading sensors 6i and 7i, and the image information is read. The read image information is transmitted to a control unit of the apparatus body 3 via a control unit mounted on the reader unit 6. The document having passed through the reading positions is discharged to the discharge tray 101 by the discharge roller pair 7f.

In the manual reading mode, the user opens the ADF 7 to expose the reading glass 6a, and sets the document on an upper surface of the reading glass 6a. Then, the user closes the ADF 7 and instructs execution of the reading operation via the operation unit 11. At this time, the user can set the monochrome or color reading mode, the size and the type of the sheet onto which the copy image of the document is to be output, the number of copies, and the like by operating the operation unit 11.

When the reading operation is started, the reading sensor 6i optically scans the document while moving in the X-axis direction and reads the image information. The read image information is transmitted to the control unit of the apparatus body 3 via the control unit mounted on the reader unit 6. When the document operation is completed, the reading sensor 6i moves to a predetermined standby position (home position) to prepare for the next document.

### ADF

Details of the ADF 7 according to the present embodiment will be described. The ADF 7 is an example of a sheet conveyance apparatus that conveys the sheet. The following description is based on a posture of the ADF 7 when the ADF 7 is at the closed position.

As illustrated in FIG. 3, the ADF 7 includes an extension tray 102 and a card touch portion 103 in addition to the document tray 8, the discharge tray 101, and the like described above.

The ADF 7 includes an ADF housing 70 and an opening/closing cover 71. The ADF housing 70 is a housing (main housing) that accommodates therein at least one of the conveyance members (7a to 7f) included in the ADF 7. A guide member that forms a conveyance path for the document and the reading sensor 7i are accommodated in the ADF housing 70. The document tray 8 is pivotably supported by the ADF housing 70. The discharge tray 101 and the card touch portion 103 are a part of the ADF housing 70 (a part of an upper surface of the ADF housing 70). The opening/closing cover 71 is pivotably supported by the ADF housing 70, and is configured to be openable and closable so as to open at least a part of the conveyance path for the document.

The extension tray 102 can be pulled out toward the +X side, which is a sheet discharge direction, with respect to the discharge tray 101. By pulling out the extension tray 102, it is possible to prevent the document whose length in the sheet discharge direction is longer than that of the discharge tray 101 from falling from the discharge tray 101.

The card touch portion 103 is a part at which the user holds an IC card in order to cause an IC card reader 109 to read information. The card touch portion 103 is disposed near an end portion on a front surface side (-Y side) of the upper surface of the ADF housing 70. The card touch portion 103 is disposed on the front surface side (front side) with respect to a rib 101a of the discharge tray 101 and the extension tray 102.

### Housing Lower Cover Portion

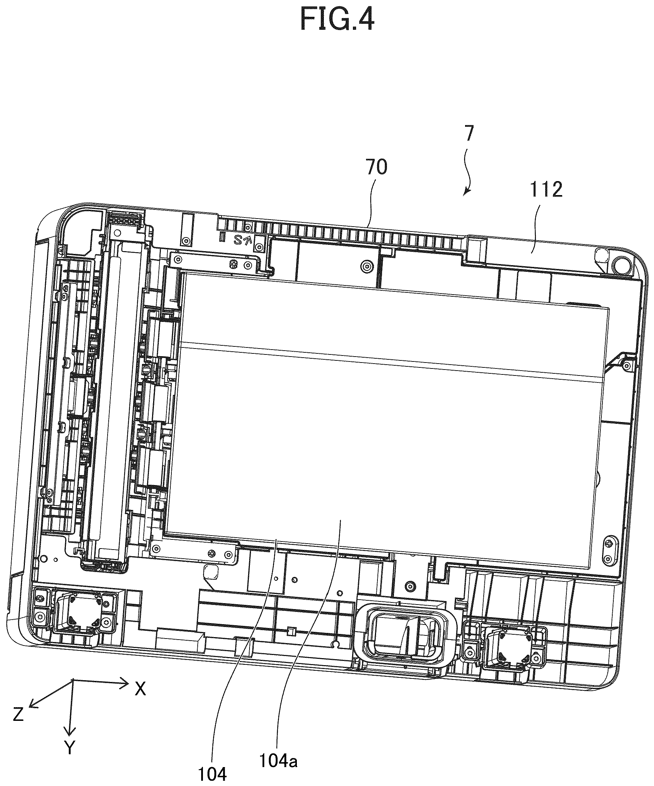

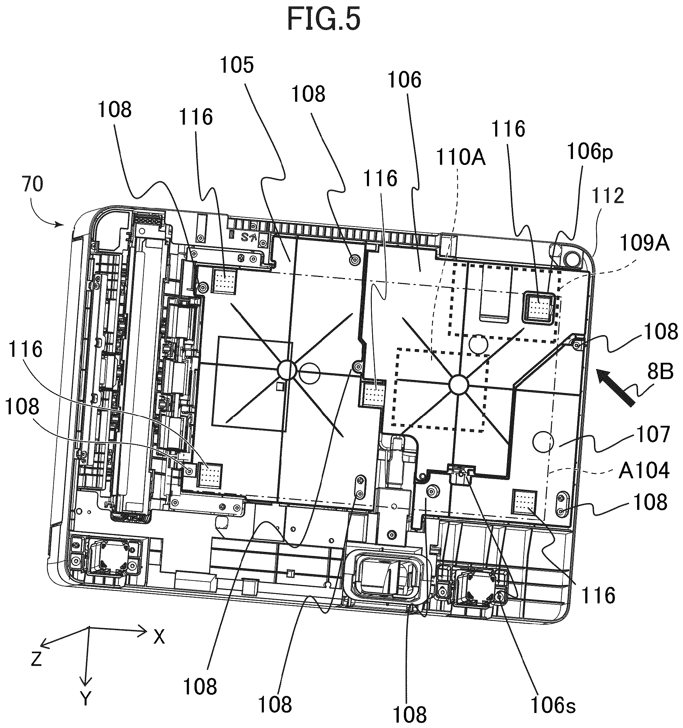

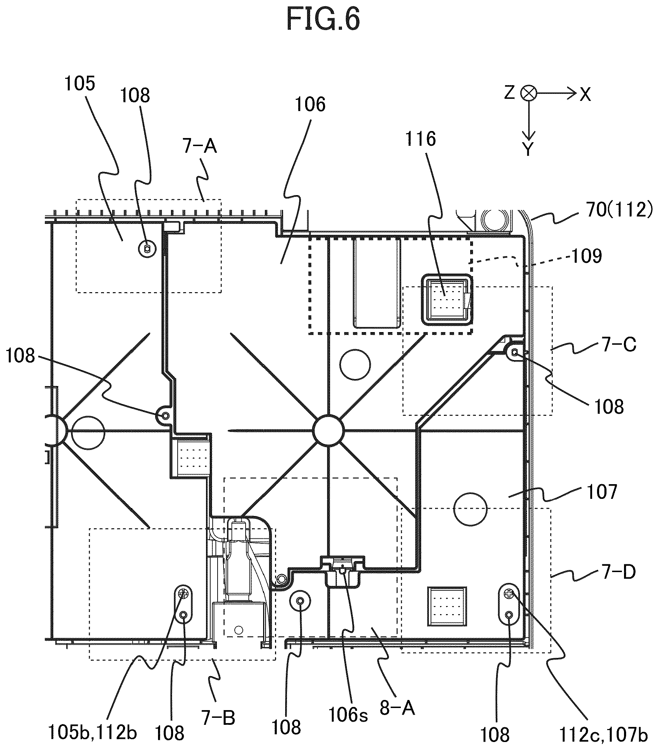

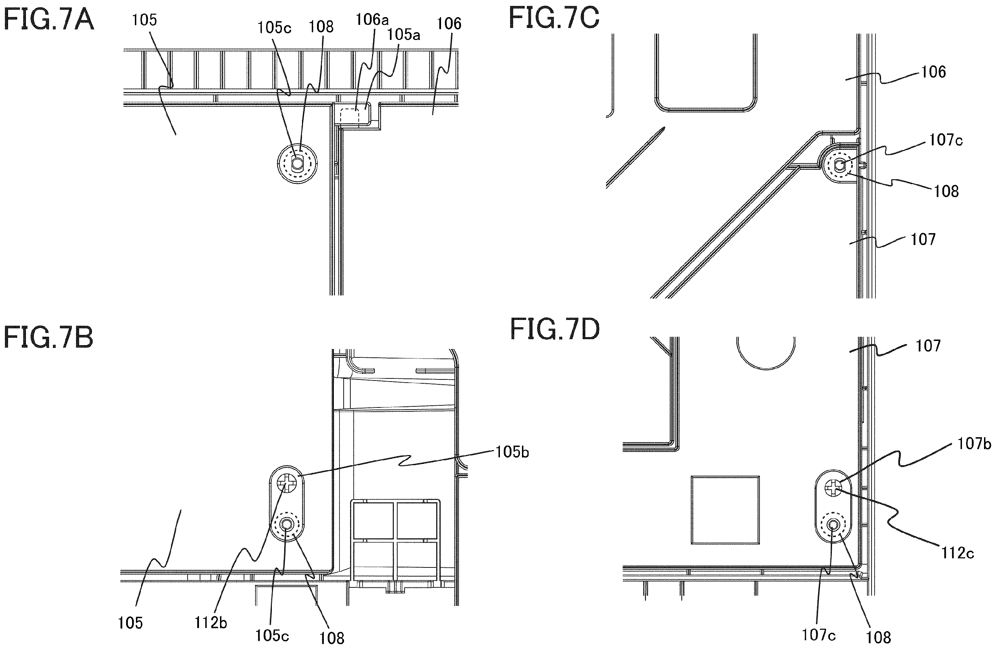

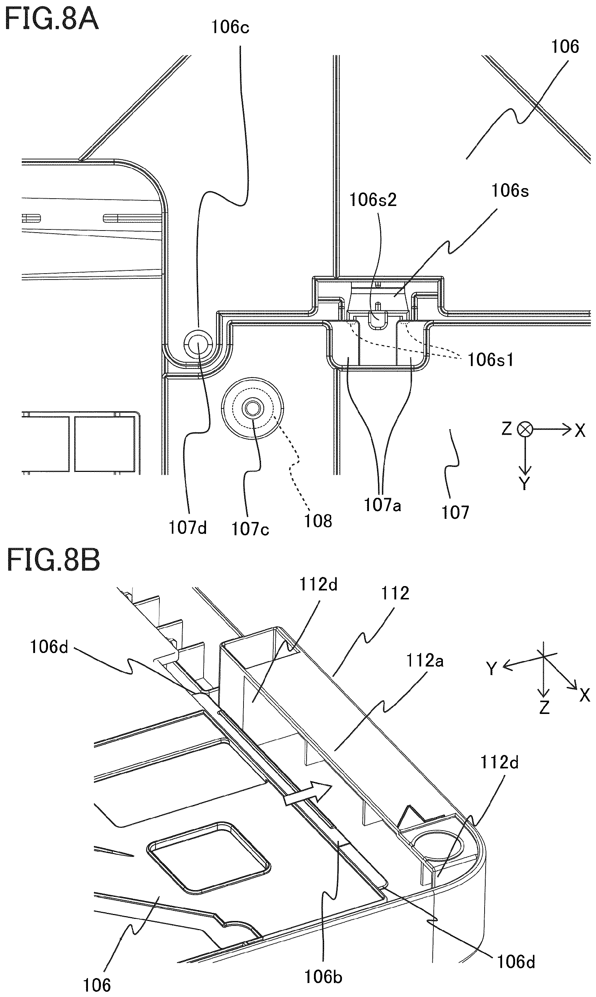

The housing lower cover portion attached to a lower portion of the ADF housing 70 will be described. FIG. 4 is a view of the ADF 7 when viewed from a pressing plate 104 side (-Z side, i.e. lower side). FIG. 5 is a view illustrating the ADF 7 in a state in which the pressing plate 104 is removed. FIG. 6 is an enlarged view illustrating a part of the ADF 7 illustrated in FIG. 5. FIGS. 7A to 7D and FIG. 8A are enlarged views of parts of the ADF 7 illustrated in FIG. 6. FIG. 7A corresponds to a region 7-A in FIG. 6. FIG. 7B illustrates a region 7-B in FIG. 6. FIG. 7C illustrates a region 7-C of FIG. 6. FIG. 7D illustrates a region 7-D of FIG. 6. FIG. 8A illustrates a region 8-A in FIG. 6. FIG. 8B is a perspective view illustrating a part of the ADF 7 when viewed in a direction of an arrow 8B illustrated in FIG. 5.

As illustrated in FIG. 4, the pressing plate 104 is attached at the lower portion of the ADF 7. The pressing plate 104 faces the reading glass 6a (FIG. 1) of the reader unit 6 in a state in which the ADF 7 is at the closed position, and is configured to press the document against the reading glass 6a. The pressing plate 104 is a plate-shaped member having an area larger than that of a maximum-size document that can be placed on the reading glass 6a.

As illustrated in FIG. 5, a left side cover 105, a central cover 106, and a right side cover 107 are attached on an inner side of the pressing plate 104. Each of the left side cover 105, the central cover 106, and the right side cover 107 is a cover member attached to the lower portion of the ADF housing 70. The left side cover 105, the central cover 106, and the right side cover 107 may be collectively referred to as the housing lower cover portion.

The central cover 106 is an example of a first cover attached to the lower portion of the ADF housing 70 so as to cover an attaching portion to which a communication unit is attached. The right side cover 107 is an example of a second cover attached to the lower portion of the ADF housing 70 so as to cover a region different from that of the first cover. The left side cover 105 is an example of a third cover attached to the lower portion of the ADF housing 70 so as to cover a region different from the region of the first cover and the region of the second cover. However, the second cover only needs to cover a region different from that of the first cover, and for example, the left side cover 105 of the present embodiment can also be referred to as the second cover.

The ADF housing 70 includes a housing member 112 (lower frame). The housing member 112 may be a resin-molded article. An upper surface of the housing member 112 forms at least a part of the discharge tray 101. That is, at least a part of the discharge tray 101 is formed by the housing member 112. The left side cover 105, the central cover 106, and the right side cover 107 are attached to a surface (lower surface) of the housing member 112, the surface being opposite to the surface (upper surface) forming the discharge tray 101. The card touch portion 103 may be a part of the housing member 112, or the card touch portion 103 may be provided in a member different from the housing member 112.

The left side cover 105 mainly covers a left side (-X side) region in the entire region covered by the pressing plate 104. The right side cover 107 mainly covers a right side (+X side) region in the entire region covered by the pressing plate 104. The central cover 106 mainly covers a region between the left side cover 105 and the right side cover 107 in the entire region covered by the pressing plate 104. The central cover 106 of the present embodiment also covers the vicinity of an end portion on a right side (+X side) and a front side (-Y side) of the housing member 112, which is an attachment position of the IC card reader 109, in the entire region covered by the pressing plate 104.

A plurality of hook-and-loop fasteners 116 each functioning as a holding portion for holding the pressing plate 104 (pressing member) is attached to the lower portion of the ADF housing 7. At least some of the hook-and-loop fasteners 116 are attached to the housing lower cover portion (105, 106, and 107). The hook-and-loop fastener 116 is also attached to the pressing plate 104 at a position corresponding to each hook-and-loop fastener 116 on a housing side. The pressing plate 104 is held under the housing lower cover portion (105, 106, and 107) via the hook-and-loop fastener 116. The housing lower cover portion (105, 106, and 107) has a function of reducing an operation sound leaking to the outside of the ADF 7 (noise reduction function).

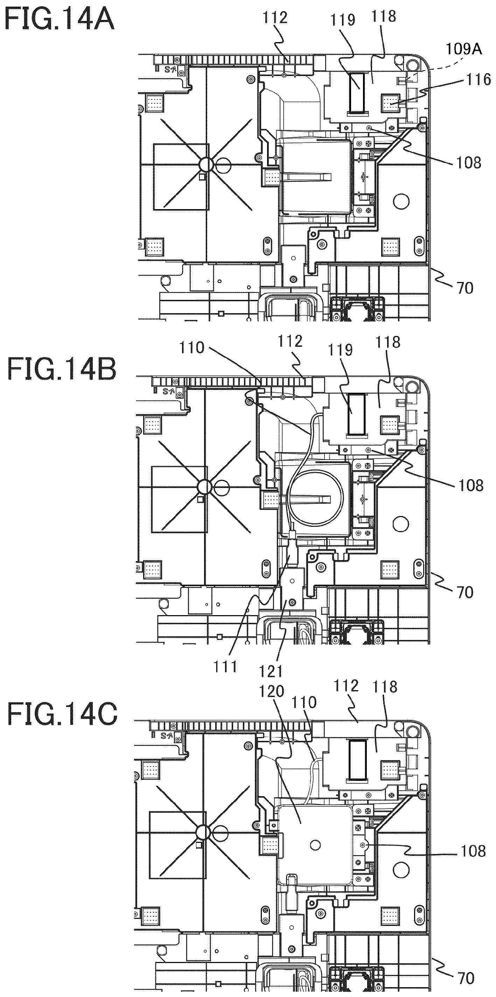

Some of the hook-and-loop fasteners 116 may be attached to a member other than the housing lower cover portion (105, 106, and 107). In the present embodiment, one or more hook-and-loop fasteners 116 are attached to each of the left side cover 105 and the right side cover 107. The hook-and-loop fastener 116 may be attached to the housing member 112. On the other hand, the hook-and-loop fastener 116 is not attached to the central cover 106, and a through-hole 106p for exposing the hook-and-loop fastener 116 (FIG. 14A) attached to a card reader cover 118 is formed. In other words, the central cover 106 (first cover) has the through-hole 106p serving as an opening through which the hook-and-loop fastener 116 (holding portion) different from the hook-and-loop fastener 116 (holding portion) provided on the right side cover 107 is exposed. That is, the hook-and-loop fastener 116 is not attached to the central cover 106 that is not secured by screws to the housing member 112.

As illustrated in FIGS. 5 and 6, each of the left side cover 105 and the right side cover 107 is fixed to the housing member 112 by a plurality of screws 108 (a plurality of screw members) serving as fastening members. The left side cover 105 and the right side cover 107 have positioning holes 105b and 107b so as to be positioned with respect to the housing member 112. Meanwhile, the central cover 106 is fixed to the housing member 112, as described below.

As illustrated in FIGS. 6, 7A, and 7B, the left side cover 105 is formed to have the positioning hole 105b and a through-hole 105c through which the screw 108 is inserted. The housing member 112 has a positioning boss 112b to be engaged with the positioning hole 105b and a screw hole to which the screw 108 is attached. As the positioning hole 105b is engaged with the positioning boss 112b, a position of the left side cover 105 in the X-axis direction and the Y-axis direction with respect to the housing member 112 is determined. In addition, each screw 108 is fastened to the screw hole of the housing member 112 via the through-hole 105c in a state in which the positioning hole 105b is engaged with the positioning boss 112b, whereby the left side cover 105 is fixed to the housing member 112 in a state in which rotation around the positioning hole 105b is prevented.

As illustrated in FIGS. 6, 7C, and 7D, the positioning hole 107b and a through-hole 107c through which the screw 108 is inserted are formed in the right side cover 107. The housing member 112 has a positioning boss 112c to be engaged with the positioning hole 107b and a screw hole to which the screw 108 is attached. As the positioning hole 107b is engaged with the positioning boss 112c, a position of the right side cover 107 in the X-axis direction and the Y-axis direction with respect to the housing member 112 is determined. In addition, each screw 108 is fastened to the screw hole of the housing member 112 via the through-hole 107c in a state in which the positioning hole 107b is engaged with the positioning boss 112c, whereby the right side cover 107 is fixed to the housing member 112 in a state in which rotation around the positioning hole 107b is prevented.

The positions and the numbers of the positioning holes 105b and 107b and screws 108 are variable. In the present embodiment, a hole portion (positioning hole 105b) serving as a positioned portion is provided in the left side cover 105, and a protrusion (positioning boss 112b) serving as a positioning portion is provided in the housing member 112, but a positioning method is not so limited. For example, a protrusion serving as a positioned portion may be provided in the left side cover 105, and a hole portion serving as a positioning portion to be engaged with the protrusion may be provided in the housing member 112. The protrusion serving as the positioned portion may be provided in the right side cover 107, and the hole portion serving as the positioning portion to be engaged with the protrusion may be provided in the housing member 112.

As illustrated in FIGS. 6, 7A, 8A, and 8B, the central cover 106 includes a left claw portion 106a, a front claw portion 106b, a positioning hole 106c, and a snap-fit portion 106s.

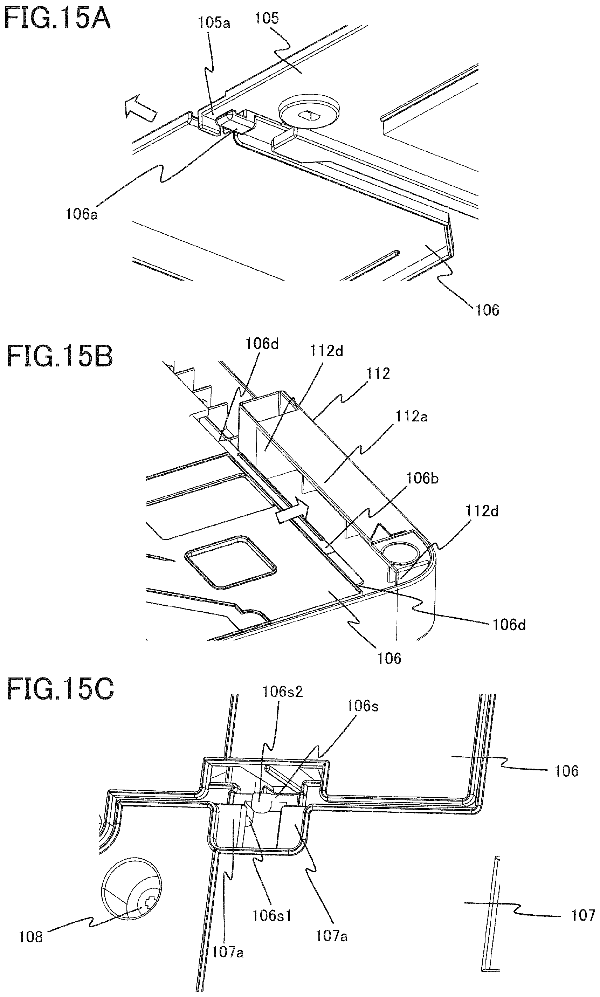

The left side cover 105 has a projection 105a (third claw portion) configured to be engaged with the left claw portion 106a (see also FIGS. 7A and 15A). The housing member 112 has a rib 112a and a wall 112d (see also FIGS. 8B and 15B) configured to be engaged with the front claw portion 106b. The right side cover 107 has a rib 107a serving as an engagement portion to be engaged with the snap-fit portion 106s and a positioning boss 107d for positioning the central cover 106.

The front claw portion 106b of the central cover 106 is disposed on one end side (front side and -Y side) of the central cover 106 in the Y-axis direction, and the positioning hole 106c and the snap-fit portion 106s are disposed on the other end side (back side and +Y side) of the central cover 106 in the Y-axis direction. The left claw portion 106a is disposed at one end portion (left end portion) of the central cover 106 in the X-axis direction and on the same side (front side and -Y side) as the front claw portion 106b in the Y-axis direction. That is, the snap-fit portion 106s is disposed at one end portion of the central cover 106 in a first direction (the Y-axis direction in the present embodiment) along the pressing surface 104a of the pressing plate 104, and the front claw portion 106b (protrusion) is disposed at the other end portion of the central cover 106 in the first direction.

The central cover 106 is fixed by engaging the front claw portion 106b, the left claw portion 106a, and the snap-fit portion 106s of the central cover 106 with the rib 112a of the housing member 112, the projection 105a of the left side cover 105, and the rib 107a of the right side cover 107, respectively. That is, the central cover 106 of the present embodiment is fixed to the housing member 112 by being engaged with each of the housing member 112, the left side cover 105, and the right side cover 107.

The front claw portion 106b of the central cover 106 is engaged with the rib 112a of the housing member 112, whereby a position of a front end portion of the central cover 106 in the Y-axis direction and the Z-axis direction is regulated (FIG. 8B). End portions 106d on both sides of the front claw portion 106b extending in the X-axis direction are engaged with the walls 112d of the housing member 112 provided on both sides of the rib 112a, whereby a front end portion of the central cover 106 in the X-axis direction is positioned. The front claw portion 106b (protrusion) of the central cover 106 is inserted into a recess formed by the rib 112a and the walls 112d on both sides in an upper-right direction (a direction of a white arrow) of FIG. 8B. The front end portion of the central cover 106 is held by the housing member 112 by the engagement between the front claw portion 106b and the recess of the housing member 112.

The snap-fit portion 106s is disposed at an end portion on the back side (+Y side) of the central cover 106 (FIG. 6). As illustrated in FIG. 8A, the snap-fit portion 106s includes a latch portion 106s1 that is latched by the rib 107a (engagement portion) and an operation portion 106s2 (knob portion) operated by the user. In a state in which the central cover 106 is attached to the ADF housing 70, a part of the latch portion 106s1 is at a position overlapping the rib 107a when viewed in the Z-axis direction. As the latch portion 106s1 is latched by the rib 107a, the end portion on the back side (+Y side) of the central cover 106 is restricted from moving in a direction away from the housing member 112 in the Z-axis direction (a front direction in FIG. 8A).

The snap-fit portion 106s is elastically deformable. The snap-fit portion 106s is elastically deformed such that the latch portion 106s1 moves to a position not interfering with the rib 107a (engagement portion) when the central cover 106 is pushed toward the ADF housing 70 and in a case where the operation portion 106s2 is operated. When the central cover 106 is pushed toward the housing member 112 in the Z-axis direction, a portion of the snap-fit portion 106s that is closer to a base side than the latch portion 106s1 is elastically deformed, so that the latch portion 106s1 passes through the rib 107a. When the latch portion 106s1 passes through the rib 107a, the latch portion 106s1 moves downward in FIG. 8A due to elasticity of the snap-fit portion 106s, and overlaps the rib 107a when viewed in the Z-axis direction. When disengaging or releasing the snap-fit portion 106s and the rib 107a, it is sufficient if the operation portion 106s2 is pressed upward in FIG. 8A to separate the latch portion 106s1 from the rib 107a.

In addition, in a state in which the snap-fit portion 106s is engaged with the rib 107a of the right side cover 107, the positioning hole 106c of the central cover 106 is engaged with the positioning boss 107d of the right side cover 107 (FIG. 8A). The positioning boss 107d is a projection portion projecting in a perpendicular direction (Z-axis direction) perpendicular to the pressing surface 104a (FIG. 4) of the pressing plate 104. The positioning hole 106c is a hole portion that is engaged with the projection portion. The engagement between the positioning hole 106c and the positioning boss 107d determines a position of the end portion on the back side (+Y side) of the central cover 106 in the X-axis direction and the Y-axis direction with respect to the right side cover 107. Relative movement of the central cover 106 (first cover) with respect to the right side cover 107 (second cover) in a direction (X-axis direction and Y-axis direction) along the pressing surface 104a of the pressing plate 104 is restricted by the engagement between the positioning hole 106c (hole portion) and the positioning boss 107d (projection portion). As a result, the central cover 106 that is not secured by screws can be accurately positioned. In addition, in a case where the housing lower cover portion is implemented by a plurality of cover members, it is possible to suppress generation of a gap due to positional displacement between the cover members.

The positioning hole 106c may be formed in the right side cover 107 (second cover), and the positioning boss 107d may be formed in the central cover 106 (first cover). That is, one of the first cover and the second cover may have the projection portion, and the other of the first cover and the second cover may have a hole portion. The positioning boss 107d may be formed in the housing member 112 instead of the right side cover 107.

In a state in which the snap-fit portion 106s is engaged with the rib 107a of the right side cover 107, the left claw portion 106a of the central cover 106 is engaged with the projection 105a of the left side cover 105 (FIGS. 7A and 15A). Relative movement between the central cover 106 and the left side cover 105 is suppressed by the engagement between the left claw portion 106a and the projection 105a. In other words, as a part of the central cover 106 (first cover) is engaged with a part of the left side cover 105 (third cover), the relative movement between the central cover 106 and the left side cover 105 is restricted. Thus, the central cover 106 that is not secured with screws can be accurately positioned. In addition, in a case where the housing lower cover portion is implemented by a plurality of cover members, it is possible to suppress generation of a gap due to positional displacement between the cover members.

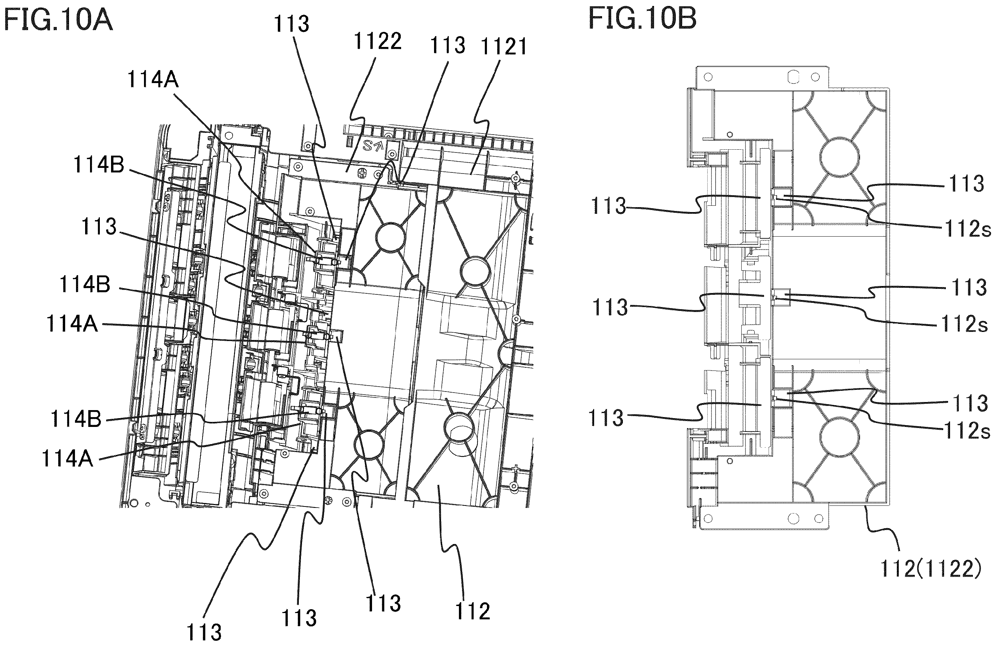

As illustrated in FIG. 10A, a plurality of holes 113 are formed in the lower surface of the housing member 112 of the ADF 7. FIG. 10B is an enlarged view of a part of the housing member 112. The housing member 112 of the present embodiment includes a first component 1121 that forms most of the lower surface of the ADF housing 70, and a second component 1122 attached so as to cover an opening portion of the first component 1121 (FIG. 10A). FIG. 10B illustrates the second component 1122.

The plurality of holes 113 of the housing member 112 are formed, for example, to attach components for implementing the function of the ADF 7. For example, in order to bring a lower roller of the discharge roller pair 7f into pressure contact with an upper roller, a holder 114A that holds the lower roller and an urging member 114B that generates an urging force may be used. The holder 114A is swingably supported by the housing member 112. The urging member 114B is a spring member connected to the housing member 112 and the holder 114A, and urges the holder 114A such that the lower roller is pressed against the upper roller. In this case, a spring hooking portion 112s of the housing member 112 on which one end of the spring member is hooked is disposed on an inner side of the hole 113 or at a peripheral edge portion. Further, another hole 113 is formed such that a part of the holder 114A on which the other end of the spring member is hooked is exposed. Since the spring hooking portion is exposed when viewed from the lower (-Z) side of the housing member 112 through the plurality of holes 113, the urging member 114B may be more easily attached.

The hole 113, as an example, may be formed as a hole, a notch, a groove, or the like, in the housing member 112.

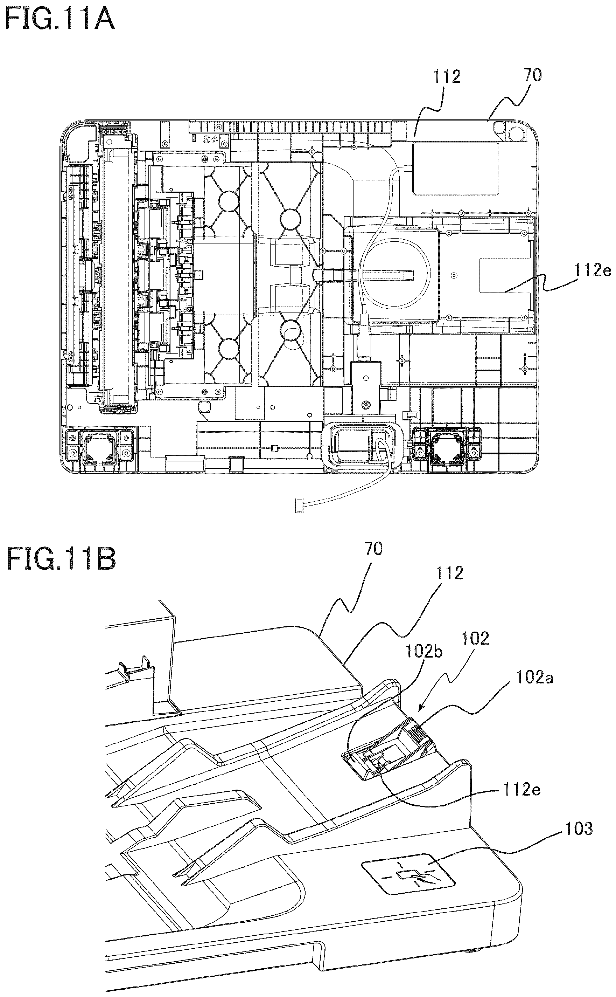

Another example of the hole formed in the housing member 112 will be described with reference to FIGS. 11A and 11B. As illustrated in FIGS. 11A and 11B, a notch portion 112e for disposing the extension tray 102 is formed in the housing member 112. As illustrated in FIG. 11B, the extension tray 102 includes a pivoting member 102a that is pivotable between a fallen posture (FIG. 11B) and a standing posture, extending upward from the fallen posture, and a base member 102b that pivotably supports the pivoting member 102a. The base member 102b is positioned below the pivoting member 102a and is slidable in the sheet discharge direction with respect to the discharge tray 101. At least a part of the pivoting member 102a can protrude upward from the discharge tray 101 via the notch portion 112e.

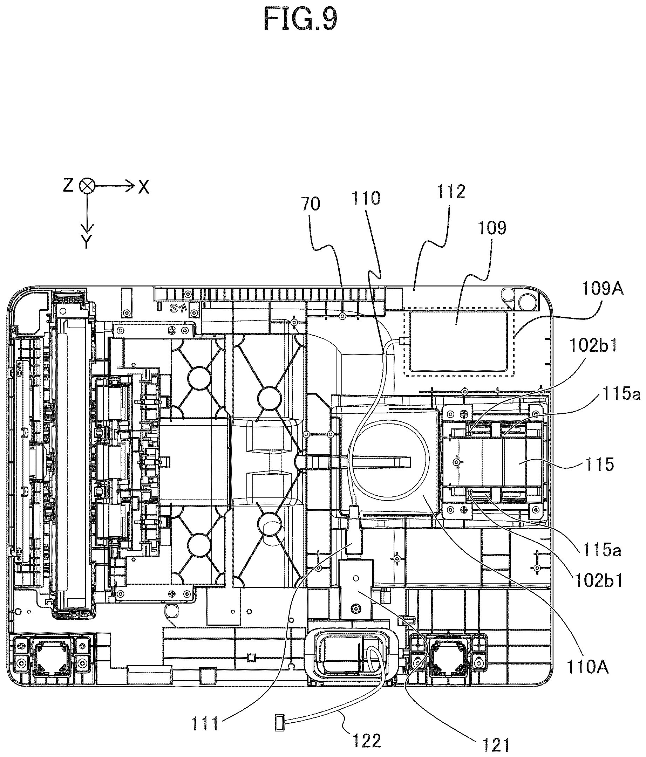

As illustrated in FIG. 9, an extension tray cover 115 that covers the extension tray 102 from below is attached to the housing member 112. The extension tray cover 115 is provided with a hole 115a extending in a direction (X-axis direction) along the sheet discharge direction, and a projection portion 102b1 of the base member 102b is engaged with the hole 115a. The engagement between the hole 115a and the projection portion 102b1 can regulate a slidable range of the base member 102b.

Operation sound of the ADF 7 may leak outside of the ADF 7 through the holes formed in the lower surface of the ADF housing 7, such as the holes 113 and 115a described above. The operation sound of the ADF 7 is generated when the ADF 7 is in operation (when the reading operation in the automatic reading mode is performed) and emitted to the outside of the ADF 7. The operation sound of the ADF 7 is generated due to various causes. For example, the operation sound includes a rotation sound of the motor M (FIG. 1), a sound (gear noise) accompanying an operation of a drive transmission mechanism (a gear train or the like) from the motor M to the conveyance members, vibration due to eccentricity of a rotation shaft of the conveyance member, a sliding sound between the document and a conveyance guide inside the ADF 7, and the like.

Here, by attaching the left side cover 105, the central cover 106, and the right side cover 107 to the lower portion of the ADF housing 7 to cover the holes 113 and 115a of the ADF housing 7, it is possible to reduce the operation sound leaking to the outside of the ADF 7. That is, the holes 113 and 115a formed on the lower surface of the ADF housing 70 are covered by the central cover 106 (first cover), the right side cover 107 (second cover), and the left side cover 105 (third cover). For example, the central cover 106 (first cover) covers at least some of the holes 115a. The right side cover 107 (second cover) covers at least some of the holes 115a. The central cover 106 (first cover) may cover the entire holes 115a together with the right side cover 107 (second cover). The left side cover 105 (third cover) covers at least some of the holes 113. As a result, it is possible to reduce the operation sound leaking to the outside of the ADF 7 through the holes 113 and 115a.

The housing lower cover portion (105, 106, and 107) may cover a wide range of the lower portion of the ADF housing 70. For example, when the ADF 7 is viewed from below with reference to the posture of the ADF 7 at the closed position, an area covered by the housing lower cover portion (105, 106, and 107) may be 50% or more of the entire area of the lower surface of the ADF housing 70.

In addition, the housing lower cover portion (105, 106, and 107) may cover most of a region covered by the pressing plate 104 (a region A104 indicated by a broken line in FIG. 5) when the ADF 7 is viewed from below. As a result, it becomes easier to reduce the operation sound leaking to the outside of the ADF 7. For example, an area of a region where the housing lower cover portion (105, 106, and 107) and the pressing plate 104 overlap each other when the ADF 7 is viewed from below may be 50% of an area of the pressing plate 104, and may be more 75% or more.

### IC Card Reader

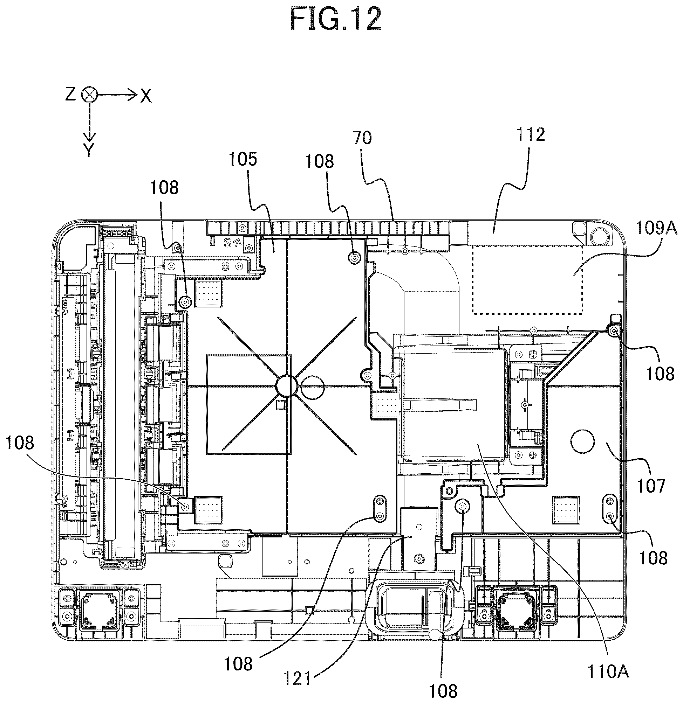

As illustrated in FIGS. 9 and 12, the ADF housing 70 is provided with a card-reader attaching portion 109A serving as an attaching portion to which the IC card reader 109 may be attached. FIG. 9 is a view illustrating the ADF 7 in a state in which the pressing plate 104, the housing lower cover portion (105, 106, and 107), the card reader cover 118, and a wire bundle cover 120 are removed.

The card-reader attaching portion 109A is provided on a back side of the card touch portion 103. That is, the card-reader attaching portion 109A is a portion in the housing member 112, the portion forming a space in which the IC card reader 109 is attached on a lower surface side of the housing member 112. The IC card reader 109 is an example of the communication unit that performs wireless communication with a communication target external to the apparatus, such as an IC card. The IC card reader 109 communicates with the IC card (ID card) held over the card touch portion 103 by the user by near field communication (NFC), for example, and can acquire information such as authentication information (identification information).

The information acquired by the IC card reader 109 is transmitted to the control unit of the apparatus body 3, and is used for, for example, determining whether or not use of the image forming apparatus 1 is permitted and controlling calling of a print job transmitted by the user from a desk of the user. By attaching the IC card reader 109, it is possible to improve security and usability of the image forming apparatus 1.

In the present embodiment, the IC card reader 109 is not provided as standard equipment in the image reading apparatus IR, and is an optional unit. That is, the image reading apparatus IR can be used in a state in which the IC card reader 109 is not attached. In addition, after the start of use of the image reading apparatus IR, the IC card reader 109 can be attached to the image reading apparatus IR or replaced with another type of communication unit. Attachment work may be performed by a service person or the user. Even in a case where the IC card reader 109 is provided as standard equipment in the image reading apparatus IR, the IC card reader 109 may be attachable to and detachable from the image reading apparatus IR for maintenance of the IC card reader 109.

As illustrated in FIG. 9, the IC card reader 109 is attached to the lower surface of the housing member 112. That is, the card-reader attaching portion 109A to which the IC card reader 109 is attached is provided on the lower surface of the housing member 112.

In addition, the ADF 7 includes a connection portion 121 attached to the lower surface of the housing member 112. In a case where the IC card reader 109 is attached to the ADF 7, the IC card reader 109 and the connection portion 121 are electrically connected via the wire bundle 110 (cable). The wire bundle 110 of the present embodiment is a universal serial bus (USB) cable. A USB connector 111, which is a terminal portion provided at one end of the wire bundle 110, is connected to the connection portion 121.

The connection portion 121 is electrically connected to the control unit of the reader unit 6 via a cable 122. The control unit of the reader unit 6 is electrically connected to the control unit of the apparatus body 3 via the cable. Information read by the IC card reader 109 is transmitted to the control unit of the apparatus body 3 via the wire bundle 110 and the cable 122.

Different types of IC card readers 109 may be selectively attached to the card-reader attaching portion 109A according to a user selected function. A length of the wire bundle 110 may vary depending on the type of the IC card reader 109. A wire bundle accommodation portion 110A serving as an accommodation portion capable of accommodating a part of the wire bundle 110 is provided on the lower surface of the housing member 112 of the present embodiment. As the wire bundle accommodation portion 110A is provided and covered by the wire bundle cover 120, even when the wire bundle 110 is long, it is possible to prevent the wire bundle 110 from colliding with surrounding members in the ADF 7 at the time of opening and closing the ADF 7 and generating abnormal noise.

The central cover 106 described above is configured to cover at least a part of the IC card reader 109 when the ADF 7 is viewed from below (-Z side) (FIG. 6). The central cover 106 of the present embodiment covers the entire IC card reader 109. In addition, the central cover 106 of the present embodiment covers substantially the entire wire bundle 110 except for the USB connector 111. In addition, the central cover 106 of the present embodiment is configured to cover at least a part of the card-reader attaching portion 109A and at least a part of the wire bundle accommodation portion 110A. The central cover 106 of the present embodiment may cover the whole of the card-reader attaching portion 109A and/or the whole of the wire bundle accommodation portion 110A.

In the present embodiment, the IC card reader 109 and a portion of the wire bundle 110 excluding the USB connector 111 are accommodated in a space formed between the housing member 112 and the central cover 106.

### Attachment Method for IC Card Reader

A procedure for attaching the IC card reader 109 to the ADF 7 will be described. First, the ADF 7 is moved to the open position, the hook-and-loop fastener 116 is detached to remove the pressing plate 104 from the ADF housing 70, and the housing lower cover portion (105, 106, and 107) is exposed (FIG. 5). Next, the central cover 106 is removed from the ADF housing 7. The operation portion 106s2 of the snap-fit portion 106s is pressed upward in FIG. 8A to separate the latch portion 106s1 from the rib 107a of the right side cover 107, thereby disengaging the snap-fit portion 106s from the rib 107a.

Then, the front claw portion 106b and the left claw portion 106a of the central cover 106 are separated from the rib 112a (FIG. 8B) of the housing member 112 and the projection 105a (FIG. 7A) of the left side cover 105. Accordingly, the removal of the central cover 106 is completed.

When the pressing plate 104 and the central cover 106 are removed, the card-reader attaching portion 109A, the wire bundle accommodation portion 110A, and the connection portion 121 are exposed as illustrated in FIG. 12, and the IC card reader 109, the wire bundle 110, and the USB connector 111 may be attached to the ADF 7. At this time, the left side cover 105 and the right side cover 107 remain attached to the housing member 112 with the screws 108.

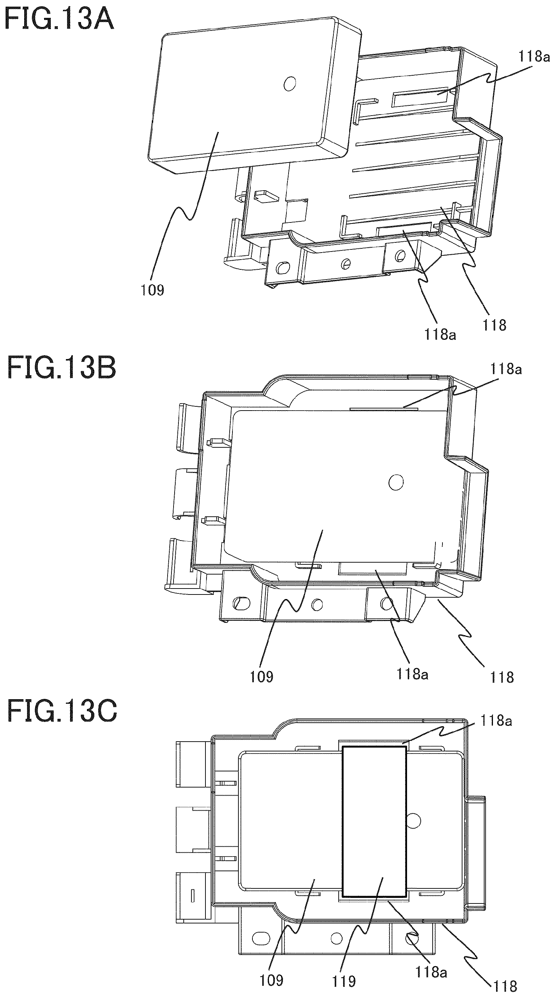

Regarding a procedure for attaching the IC card reader 109 to the ADF 7, the IC card reader 109 is initially housed inside the card reader cover 118 as illustrated in FIGS. 13A and 13B. The card reader cover 118 is a box-shaped member opened on one side, and has two hole portions 118a through which a fixing tool passes. Next, as illustrated in FIG. 13C, a tape-shaped hook-and-loop fastener 119 is wound around the card reader cover 118 and the IC card reader 109 through the hole portions 118a, whereby the card reader cover 118 and the IC card reader 109 are fixed.

The hook-and-loop fastener 119 is an example of a fixing method, and the card reader cover 118 and the IC card reader 109 may be fixed by another method (for example, screwing, snap-fitting, and magnetic attraction).

Next, as illustrated in FIG. 14A, the card reader cover 118 and the IC card reader 109 fixed to each other are fixed to the housing member 112 with the screws 108. The above-described hook-and-loop fastener 116 for attaching the pressing plate 104 may be attached to a surface of the card reader cover 118.

Next, as illustrated in FIG. 14B, a connector at one end of the wire bundle 110 is connected to the IC card reader 109, and the USB connector 111 at the other end of the wire bundle 110 is connected to the connection portion 121 provided at the lower portion of the ADF housing 70. In a case where there is excess length in the wire bundle 110, a part of the wire bundle 110 is accommodated in the wire bundle accommodation portion 110A in a bent state.

Next, as illustrated in FIG. 14C, the wire bundle cover 120 is fixed to the housing member 112 with the screws 108.

Next, the central cover 106 is attached to the ADF housing 70 in a procedure opposite to a procedure for removing the central cover 106. That is, as illustrated in FIG. 15A, the left claw portion 106a of the central cover 106 is inserted on a lower (-Z) side of the projection 105a of the left side cover 105. As illustrated in FIG. 15B, the front claw portion 106b of the central cover 106 is inserted on a lower (-Z) side of the rib 112a of the housing member 112. Each of the left claw portion 106a and the front claw portion 106b may be engaged with a mating member at the same time by an operation of gripping the central cover 106 and sliding the central cover 106 in a predetermined direction (a direction of a white arrow in FIGS. 15A and 15B).

Then, as illustrated in FIG. 15C, the snap-fit portion 106s is engaged with the rib 107a of the right side cover 107 by pushing the central cover 106 toward the housing member 112. The attachment of the IC card reader 109 is completed by the above procedure.

### Summary

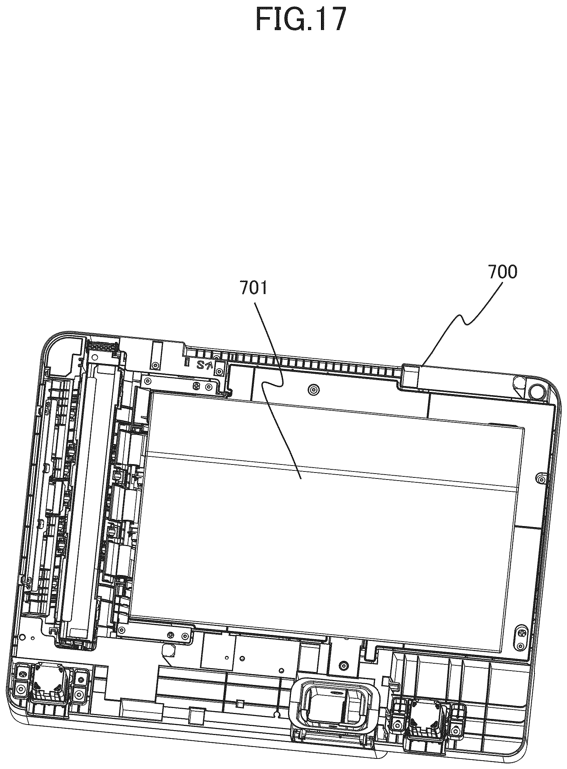

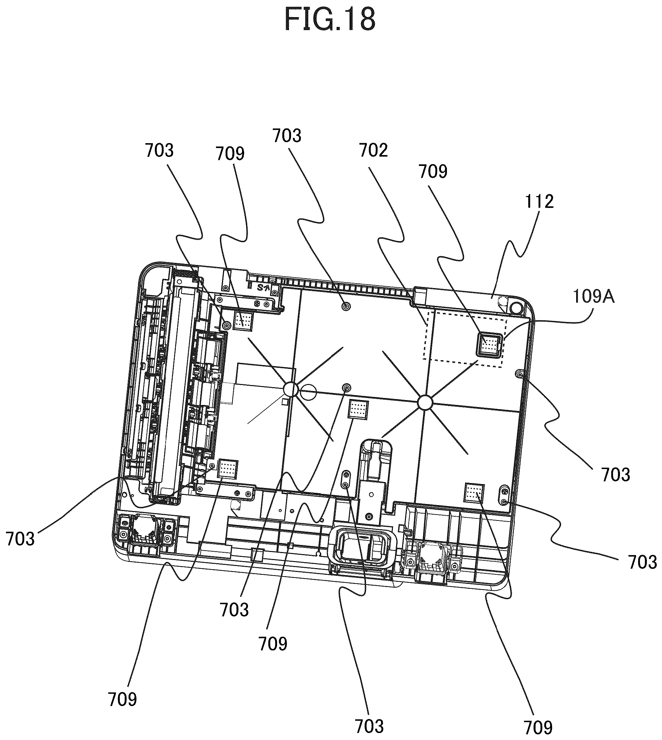

Advantages of the present embodiment will be described using a comparative example. FIG. 17 is a perspective view of an ADF 700 according to the comparative example when viewed from a pressing plate 701. FIG. 18 is a perspective view illustrating a state in which the pressing plate 701 of the ADF 700 according to the comparative example is removed.

The comparative example is different from the above-described embodiment in that a housing lower cover 702 is implemented by a single plate. The housing lower cover 702 has an area substantially equal to an area covered by three housing lower covers (the left side cover 105, the central cover 106, the right side cover 107) in the above-described embodiment. Further, the housing lower cover 702 is fixed to a housing member 112 by a plurality of screws 703. Further, the pressing plate 701 is held under the housing lower cover 702 via a plurality of hook-and-loop fasteners 709.

A basic configuration of the ADF 700 according to the comparative example is the same as that of the above-described embodiment except for a configuration related to the housing lower cover 702.

In the comparative example, a card-reader attaching portion 109A is covered by the housing lower cover 702. To attach an IC card reader 109 to the ADF 700, it is necessary to remove the housing lower cover 702 from the housing member 112 by removing all of the plurality of screws 703. After the attachment of the IC card reader 109, each screw of the plurality of screws 703 is attached to fix the housing lower cover 702 to the housing member 112.

Thus, many man-hours may be utilized for attaching and detaching the IC card reader 109 at the time of retrofitting, replacement, or the like, thus extending work time, and extending a period of time during which the image forming apparatus 1 is unavailable.

On the other hand, according to the present embodiment, the housing lower cover portion covering the lower portion of the ADF housing 70 is divided into a plurality of members. The central cover 106 (first cover) covering the card-reader attaching portion 109A is attachable to and detachable from the ADF housing 70 independently of another cover (second cover) covering a region different from that of the central cover 106. In other words, the central cover 106 serving as the first cover is attached to and detached from the ADF housing 70 while the second cover (for example, the right side cover 107) remains attached to the ADF housing 70. Unlike the comparative example, attachment work for the IC card reader 109 can be performed without attaching and detaching the plurality of screws 108 for fixing the housing lower cover other than the central cover 106. Thus, attachment of the IC card reader 109 is simplified.

As described above, according to the present embodiment, it is possible to provide the image reading apparatus and the image forming apparatus which enable simplification of work of attaching and detaching the communication unit.

### Modified Example

In the above-described embodiment, an example in which the central cover 106 is fixed to the ADF housing 70 without using a screw member, such as a screw, has been described. The present disclosure is not so limited. For example, a portion corresponding to the snap-fit portion 106s of the central cover 106 in the above-described embodiment may be fixed to the housing member 112 by a screw. Even in this case, the central cover 106 may be attached to and detached from the ADF housing 70 by attaching and detaching one screw. Thus, attachment for the communication unit can be simplified, as compared with at least the above-described comparative example.

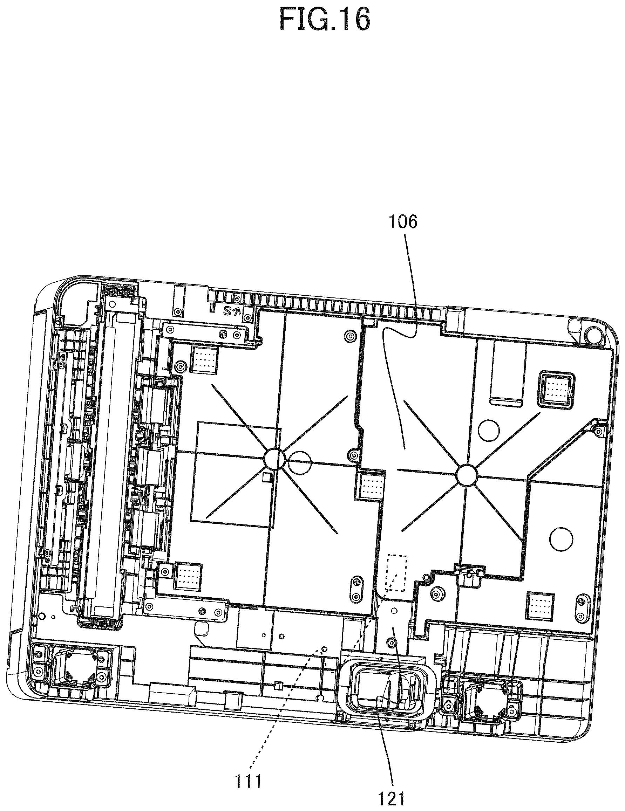

In the above-described embodiment, a configuration in which the central cover 106 does not cover the USB connector 111 (FIG. 5) has been exemplified. However, the central cover 106 may cover the USB connector 111 as illustrated in FIG. 16.

The communication target of the IC card reader 109 (communication unit) is not limited to the IC card, and for example, a communication unit capable of communicating with a smartphone may be used instead of the IC card reader 109.

In the above-described embodiment, an example in which the snap-fit portion 106s of the central cover 106 (first cover) is engaged with the rib 107a (engagement portion) provided in the right side cover 107 has been described. The present disclosure is not so limited. For example, the central cover 106 may be fixed to the ADF housing 70 by engaging the snap-fit portion 106s with a rib provided in the housing member 112. That is, the engagement portion to be engaged with the snap-fit portion 106s may be provided in at least one of the second cover and the housing.

In the above-described embodiment, an example in which the housing lower cover portion attached to the lower portion of the ADF housing 70 includes three cover members, the left side cover 105, the central cover 106, and the right side cover 107, has been described. The present disclosure is not so limited, and the housing lower cover portion may, for example, include two cover members or four or more cover members. For example, the left side cover 105 and the right side cover 107 in the above-described embodiment may be integrally formed as one cover member. That is, the housing lower cover portion may be implemented by two cover members, that is, the central cover 106 and the integrally formed cover member.

Hitherto, in attaching and detaching the communication unit to and from the apparatus, work of attaching and detaching the cover member covering the communication unit to and from the apparatus after attaching the communication unit tended to be cumbersome.

According to the present disclosure, an image reading apparatus and image forming apparatus that simplifies attaching and detaching the communication unit to/from the apparatus.

### Additional Note

The present disclosure includes at least following aspects.
(Clause 16) An image reading apparatus (IR) comprising:
   a reading unit (6) including a transparent member (6b) configured to transmit light and a reader (6i) configured to read an image on a sheet on the transparent member (6b); and
   a conveyance unit (7) configured to convey the sheet and to be opened and closed with respect to the reading unit (6),
   wherein the conveyance unit (7) includes:
      a roller (7a, 7b, 7c, 7d, 7e, 7f) configured to convey the sheet;
      a housing (70) provided with an attaching portion (109A) to which a communication unit (109) configured to perform wireless communication is attachable, the housing (70) including a lower surface on which a hole (115a) is formed;
      a first cover (106) attached to a lower portion of the housing (70) so as to cover at least a part of the attaching portion (109A);
      a second cover (107) attached to the lower portion of the housing (70) so as to cover a region including the hole (115a), the region being different from a region covered by the first cover (106); and
      a pressing member (104) configured to press the sheet against the transparent member (6b), the pressing member (104) being detachable and positioned under the first cover (106) and the second cover (107) in a state in which the conveyance unit (7) is closed, and
      wherein the first cover (106) is configured to be attached to and detached from the housing (70) in a state in which the second cover (107) remains attached to the housing (70).
(Clause 17) The image reading apparatus (IR) according to clause 16, wherein
   the first cover (106) includes a snap-fit portion (106s) that is engaged with an engagement portion (107a) provided in at least one of the second cover (107) and the housing (70),
   the first cover (106) is fixed to the housing (70) by engaging the snap-fit portion (106s) with the engagement portion (107a), and
   the fixing of the first cover (106) to the housing (70) is released by separation of the snap-fit portion (106s) from the engagement portion (107a).
(Clause 18) The image reading apparatus (IR) according to clause 17, wherein
   the snap-fit portion (106s) includes an operation portion (106s2) and a latch portion (106s1) that is latched by the engagement portion (107a), and
   the snap-fit portion (106s) is configured to be elastically deformed such that the latch portion (106s1) moves to a position not interfering with the engagement portion (107a) in a case where the first cover (106) is pushed toward the housing (70) and in a case where the operation portion (106s2) is operated.
(Clause 19) The image reading apparatus (IR) according to clause 17 or 18, wherein
   the engagement portion (107a) is provided in the second cover (107).
(Clause 20) The image reading apparatus (IR) according to any one of clauses 17 to 19, wherein
   the pressing member (104) includes a pressing surface (104a) configured to press the sheet,
   the snap-fit portion (106s) is disposed at one end portion of the first cover (106) in a first direction along the pressing surface (104a),
   the first cover (106) includes a protrusion (106b) protruding in the first direction from an other end portion of the first cover (106) in the first direction,
   the housing (70) includes a recess that is engaged with the protrusion (106b), and
   the other end portion of the first cover (106) is held by the housing (70) by engagement between the protrusion (106b) and the recess.
(Clause 21) The image reading apparatus (IR) according to clause 20, wherein
   one of the first cover (106) and the second cover (107) includes a projection portion (107d) projecting in a direction perpendicular to the pressing surface (104a),
   an other one of the first cover (106) and the second cover (107) includes a hole portion (106c) that is engaged with the projection portion (107d), and
   movement of the first cover (106) relative to the second cover (107) in a direction along the pressing surface (104a) is restricted by engagement between the projection portion (107d) and the hole portion (106c).
(Clause 22) The image reading apparatus (IR) according to any one of clauses 16 to 21, wherein
   the second cover (107) is fixed to the housing (70) by a plurality of screw members (108), and
   the first cover (106) is fixed to the housing (70) without using a screw member.
(Clause 23) The image reading apparatus (IR) according to any one of clauses 16 to 22, wherein
   the conveyance unit (7) includes a drive source (M) configured to drive the roller (7a, 7b, 7c, 7d, 7e, 7f), and
   the second cover (107) covers at least a part of the hole (115a).
(Clause 24) The image reading apparatus (IR) according to any one of clauses 16 to 23, wherein
   the conveyance unit (7) further includes a third cover (105) attached under the housing (70) to cover a region different from the region covered by the first cover (106) and the region covered by the second cover (107).
(Clause 25) The image reading apparatus (IR) according to clause 24, wherein
   movement of the first cover (106) relative to the third cover (105) is restricted by engagement between a part of the first cover (106) and a part of the third cover (105).
(Clause 26) The image reading apparatus (IR) according to any one of clauses 16 to 25, further comprising:
   a holding portion (116) configured to hold the pressing member (104),
   wherein the first cover (106) includes an opening (106p) through which the holding portion (116) is exposed.
(Clause 27) The image reading apparatus (IR) according to any one of clauses 16 to 26, further comprising:
   a connection portion (121) attached to the lower portion of the housing (70),
   wherein the housing (70) is provided with an accommodation portion (110A) configured to accommodate a cable (122) that electrically connects the connection portion (121) and the communication unit (109) attached to the attaching portion (109A), and
   the first cover (106) covers the accommodation portion (110A).
(Clause 28) The image reading apparatus (IR) according to any one of clauses 16 to 27, wherein
   the conveyance unit (7) further includes the communication unit (109) attached to the attaching portion (109A), and
   the communication unit (109) is configured to perform the wireless communication with a communication target external to the image reading apparatus (IR).
(Clause 29) The image reading apparatus (IR) according to clause 28, wherein
   the communication unit (109) is a card reader (109) configured to read information from an integrated circuit card.
(Clause 30) An image forming apparatus comprising:
   the image reading apparatus (IR) according to any one of clauses 16 to 29; and
   an image forming unit (IF) configured to form an image on a recording material based on image information read by the image reading apparatus (IR).

### Other Embodiments

Various embodiments have been described in detail above but it will be understood that the present disclosure is not limited to these embodiments and encompasses all modifications, variants, alternatives and equivalents falling within the scope of the appended claims.

## Claims

1. An image reading apparatus (IR) comprising:
a reading unit (6) including a transparent member (6b) configured to transmit light and a reader (6i) configured to read an image on a sheet on the transparent member (6b); and
a conveyance unit (7) configured to convey the sheet and to be opened and closed with respect to the reading unit (6),
wherein the conveyance unit (7) includes:
a housing (70) provided with an attaching portion (109A) to which a communication unit (109) configured to perform wireless communication is attachable;
a first cover (106) attached to a lower portion of the housing (70) so as to cover at least a part of the attaching portion (109A);
a second cover (107) including a holding portion (116) and attached to the lower portion of the housing (70) so as to cover a region different from a region covered by the first cover (106); and
a pressing member (104) configured to press the sheet against the transparent member (6b), the pressing member (104) being detachably held by the holding portion (116) and positioned under the first cover (106) and the second cover (107) in a state in which the conveyance unit (7) is closed, and
wherein the first cover (106) is configured to be attached to and detached from the housing (70) in a state in which the second cover (107) remains attached to the housing (70).

2. The image reading apparatus (IR) according to claim 1, wherein
the first cover (106) includes a snap-fit portion (106s) that is engaged with an engagement portion (107a) provided in at least one of the second cover (107) and the housing (70),
the first cover (106) is fixed to the housing (70) by engaging the snap-fit portion (106s) with the engagement portion (107a), and
the fixing of the first cover (106) to the housing (70) is released by separation of the snap-fit portion (106s) from the engagement portion (107a).

3. The image reading apparatus (IR) according to claim 2, wherein
the snap-fit portion (106s) includes an operation portion (106s2) and a latch portion (106s1) that is latched by the engagement portion (107a), and
the snap-fit portion (106s) is configured to be elastically deformed such that the latch portion (106s1) moves to a position not interfering with the engagement portion (107a) in a case where the first cover (106) is pushed toward the housing (70) and in a case where the operation portion (106s2) is operated.

4. The image reading apparatus (IR) according to claim 2 or 3, wherein
the engagement portion (107a) is provided in the second cover (107).

5. The image reading apparatus (IR) according to any one of claims 2 to 4, wherein
the pressing member (104) includes a pressing surface (104a) configured to press the sheet,
the snap-fit portion (106s) is disposed at one end portion of the first cover (106) in a first direction along the pressing surface (104a),
the first cover (106) includes a protrusion (106b) protruding in the first direction from an other end portion of the first cover (106) in the first direction,
the housing (70) includes a recess that is engaged with the protrusion (106b), and
the other end portion of the first cover (106) is held by the housing (70) by engagement between the protrusion (106b) and the recess.

6. The image reading apparatus (IR) according to claim 5, wherein
one of the first cover (106) and the second cover (107) includes a projection portion (107d) projecting in a direction perpendicular to the pressing surface (104a),
an other one of the first cover (106) and the second cover (107) includes a hole portion (106c) that is engaged with the projection portion (107d), and
movement of the first cover (106) relative to the second cover (107) in a direction along the pressing surface (104a) is restricted by engagement between the projection portion (107d) and the hole portion (106c).

7. The image reading apparatus (IR) according to any one of claims 1 to 6, wherein
the second cover (107) is fixed to the housing (70) by a plurality of screw members (108), and
the first cover (106) is fixed to the housing (70) without using a screw member.

8. The image reading apparatus (IR) according to any one of claims 1 to 7, wherein
the conveyance unit (7) includes a roller (7a, 7b, 7c, 7d, 7e, 7f) configured to convey the sheet, a hole (115a) formed on a lower surface of the housing (70), and a drive source (M) configured to drive the roller (7a, 7b, 7c, 7d, 7e, 7f), and
the second cover (107) covers at least a part of the hole (115a).

9. The image reading apparatus (IR) according to any one of claims 1 to 8, wherein
the conveyance unit (7) further includes a third cover (105) attached under the housing (70) to cover a region different from the region covered by the first cover (106) and the region covered by the second cover (107).

10. The image reading apparatus (IR) according to claim 9, wherein
movement of the first cover (106) relative to the third cover (105) is restricted by engagement between a part of the first cover (106) and a part of the third cover (105).

11. The image reading apparatus (IR) according to any one of claims 1 to 10, further comprising:
an other holding portion (116) configured to hold the pressing member (104),
wherein the first cover (106) includes an opening (106p) through which the other holding portion (116) is exposed.

12. The image reading apparatus (IR) according to any one of claims 1 to 11, further comprising:
a connection portion (121) attached to the lower portion of the housing (70),
wherein the housing (70) is provided with an accommodation portion (110A) configured to accommodate a cable (122) that electrically connects the connection portion (121) and the communication unit (109) attached to the attaching portion (109A), and
the first cover (106) covers the accommodation portion (110A).

13. The image reading apparatus (IR) according to any one of claims 1 to 12, wherein
the conveyance unit (7) further includes the communication unit (109) attached to the attaching portion (109A), and
the communication unit (109) is configured to perform the wireless communication with a communication target external to the image reading apparatus (IR).

14. The image reading apparatus (IR) according to claim 13, wherein
the communication unit (109) is a card reader (109) configured to read information from an integrated circuit card.

15. An image forming apparatus comprising:
the image reading apparatus (IR) according to any one of claims 1 to 14; and
an image forming unit (IF) configured to form an image on a recording material based on image information read by the image reading apparatus (IR).
